# EUROPEAN PATENT APPLICATION

(11) **EP 0 751 472 A1**
(43) Date of publication of application: **02.01.1997**
(21) Application number: 95201730.9
(22) Date of filing: 26.06.1995
(51) Int. Cl.: G06K 7/10

(54) **Optical scanner for producing scanning lines in two perpendicular directions**

(71) Applicant: OPTICON SENSORS EUROPE B.V., 2132 NG Hoofddorp (NL)
(72) Inventor: Peng, Ke-Ou, 2612 KV Delft (NL)
(74) Representative: de Bruijn, Leendert C.

(57) **Abstract**

Optical scanner for producing a first set of one or more scanning lines and a second set of one or more scanning lines, said first set and said second set of one or more scanning lines being substantially perpendicular to one another, comprising:
- a light source for producing a light beam (A);
- movable reflecting means (7; 71; 72; 74; 73; 174) arranged to reflect said light beam (A);
- beam separating means (9a/9b; 71ag/71ap, 71bg/71bp; 19a-19d; 701/702; 901/902) arranged to receive said light beam reflected by said movable reflecting means and to separate said light beam in separate sub-beams in order to produce said first set of one or more scanning lines and said second set of one or more scanning lines;
- multiplying means (5; 83/74; 701/702; 901/902) for multiplying the scanning lines produced.

## Description

The present invention relates to an optical scanner for producing a first set of one or more scanning lines and a second set of one or more scanning lines, the first set and the second set of one or more scanning lines being substantially perpendicular to one another.

Such an optical scanner is preferably used for scanning barcodes which may be printed in two perpendicular directions. When the longitudinal direction of a barcode to be read is unknown, the scanning pattern generated by the optical scanner produces preferably two sets of parallel lines, the two sets being perpendicular to one another. The distance between two neighbouring scanning lines within one set must be smaller than the width of the barcode to be scanned such that at least one of the scanning lines produced passes the entire barcode.

The object of the present invention is to present an optical scanner which is able to produce a first set of several scanning lines and a second set of several scanning lines, the first set and the second set being perpendicular to one another.

To obtain this object the present invention provides an optical scanner for producing a first set of one or more scanning lines and a second set of one or more scanning lines, the first set and the second set of one or more scanning lines being substantially perpendicular to one another, comprising:
- a light source for producing a light beam;
- movable reflecting means arranged to reflect the light beam;
- beam separating means arranged to receive the light beam reflected by the movable reflecting means and to separate the light beam in separate sub-beams in order to produce the first set of one or more scanning lines and the second set of one or more scanning lines;
- multiplying means for multiplying the scanning lines produced.

In a first embodiment the movable reflecting means of the optical scanner comprise a polygon connected to a motor and rotatable about an axis of rotation, the polygon comprising several reflecting planar facets and the beam separating means comprising a first mirror and a second mirror perpendicular to the first mirror.

In this first embodiment the reflecting planar facets may be substantially parallel to the axis of rotation and the first and second mirrors may be tilted substantially π/4 radians with respect to the axis of rotation.

In a second embodiment of an optical scanner according to the invention the movable reflecting means and the beam separating means are constituted by a polygon connected to a motor and rotatable about an axis of rotation, the polygon comprising at least a first set of a first and a second reflecting planar facet and a second set of a third and a fourth reflecting planar facet, the first and the second reflecting planar facets having a first line of intersection tilted substantially π/4 radians with respect to the axis of rotation, and the third and the fourth reflecting planar facets having a second line of intersection tilted substantially -π/4 radians with respect to the axis of rotation.

In the second embodiment, preferably, the first reflecting planar facet is perpendicular to the second reflecting planar facet and the third reflecting planar facet is, preferably, perpendicular to the fourth reflecting planar facet, and both the first and third planar facets are tilted substantially π/4 radians relative to the axis of rotation.

The advantage of the second embodiment is that by using only one specially shaped polygon driven by a motor to rotate about an axis of rotation several perpendicular scanning lines may be produced.

Both in the first and the second embodiment the multiplying means may comprise a further polygon may be connected to a further motor, the further polygon being provided with several reflecting facets arranged for receiving the light beam from the light source and reflecting the light beam to the movable reflecting means. By the application of such a further polygon a multiplying effect of the number of perpendicular scanning lines is established, as will be explained below. Instead of a rotating polygon an oscillating mirror could be used.

In a third embodiment of the invention the movable reflecting means and the multiplying means are constituted by a polygon connected to a driving means, the polygon comprising several reflecting planar facets, and wherein the beam separating means comprise a first mirror and a second mirror perpendicular to the first mirror, the driving means being arranged for rotating each of the reflecting planar facets about an axis of rotation in a predetermined direction of rotation and for oscillating each of the reflecting planar facets in a direction perpendicular to the predetermined direction of rotation. Such a latter type of polygon has also been disclosed in European patent application 932027345.

In a fourth embodiment of the present invention the movable reflecting means and the multiplying means are constituted by a mirror connected to a driving means for rotating the mirror about an axis of rotation in a predetermined direction of rotation and for oscillating the mirror in a further direction perpendicular to the predetermined direction of rotation, and the beam separating means comprises at least a first mirror and a second mirror perpendicular to the first mirror. Such an arrangement of a mirror which can be rotated in a predetermined direction of rotation about an axis of rotation and which is able to oscillate in a further direction perpendicular to the predetermined direction of rotation independent of the speed of rotation is disclosed by European patent application 932027345.

In a fifth embodiment the movable reflecting means of the optical scanner comprise a mirror connected to first driving means for rotating the mirror about a first axis of rotation, and wherein the beam separating means and the multiplying means are constituted by at least a first polygon connected to second driving means for rotating the first polygon about a second axis of rotation and a second polygon connected to third driving means for rotating the second polygon about a third axis of rotation perpendicular to the second axis of rotation, the first polygon comprising a first plurality of planar reflective facets parallel to the second axis of rotation and the second polygon comprising a second plurality of planar reflective facets parallel to the third axis of rotation. The second and third driving means in the fifth embodiment may comprise one single motor.

In a sixth embodiment the movable reflecting means of the optical scanner comprise a polygon connected to first driving means for rotating the polygon about a first axis of rotation, and wherein the beam separating means and the multiplying means are constituted by a first mirror connected to second driving means for oscillating the first mirror about a second axis of rotation and a second mirror connected to third driving means for oscillating the second mirror about a third axis of rotation perpendicular to the second axis of rotation, the polygon comprising a plurality of planar reflective facets.

The invention will now be explained in more detail referring to some drawings accompanying the present description. It is to be understood that the drawings only show examples of embodiments of the present invention which are not intended to limit the scope of the present invention, the scope only being defined by the claims.
Figure 1 shows an example of a scanning pattern comprising several perpendicular scanning lines for scanning e.g. barcodes;
figures 2a and 2b show a first embodiment of an optical scanner according to the invention;
figures 3a-3d show several views of a specially shaped polygon to produce scanning lines in accordance with the present invention;
figures 4a, 4b show different embodiments of an optical scanner according to the invention in which mirrors are applied which can be rotated about a predetermined axis of rotation in a predetermined direction and which are also able to oscillate in a further direction perpendicular to the direction of rotation;
figures 5a-5d show several further embodiments of the optical scanner according to the present invention.

Barcodes may be oriented in two perpendicular directions. To read such barcodes a scanning pattern is needed which comprises two sets of parallel lines, the sets being perpendicular to one another. The distance between two adjacent scanning lines must be smaller than the width of the barcode, such that at least one of the scanning lines passes the barcode to be detected.

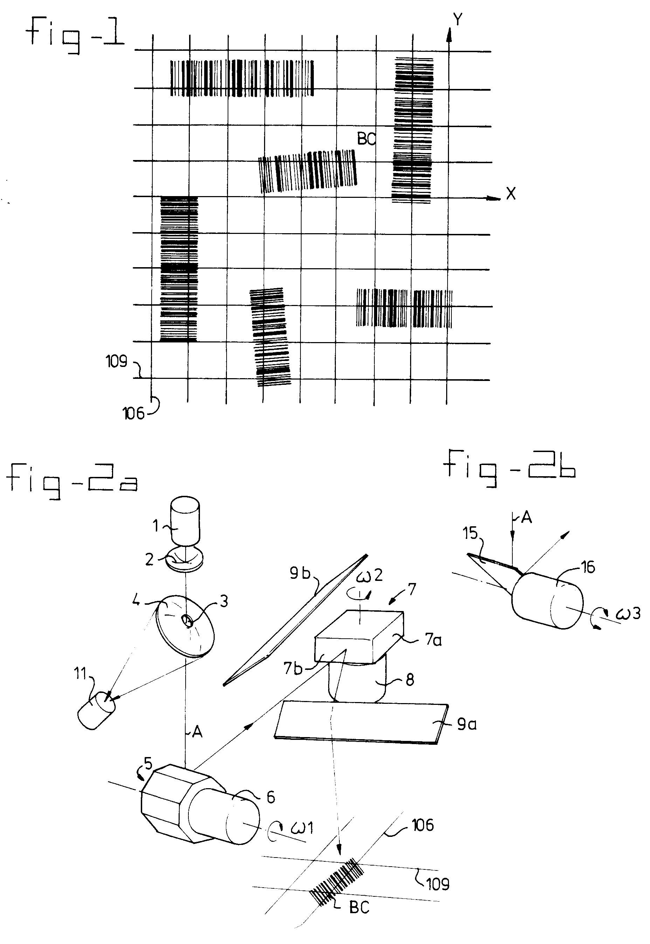

Figure 1 shows several barcodes BC to be scanned which are printed either in the x direction or in the y direction. Figure 1 also shows a scanning pattern of two sets 106, 109 of parallel lines, the two sets being perpendicular to one another.

In order to avoid interference of reflected signals no more than one scanning line is allowed to occur at a single point of the barcode simultaneously.

To establish as large a depth of field as possible a laser scanner is preferably used.

In the different embodiments of the present invention a light beam, preferably a laser beam, is reflected by either a rotating mirror or an oscillating mirror to produce several scanning lines. These scanning lines may be separated and directed in such a way that two sets of parallel scanning lines, the two sets being perpendicular to one another, are formed.

Essentially, there are three scanning geometries possible to generate the desired scanning pattern. They may be called a pre-moving geometry, a simultaneous-moving geometry, and a post-moving geometry, respectively.

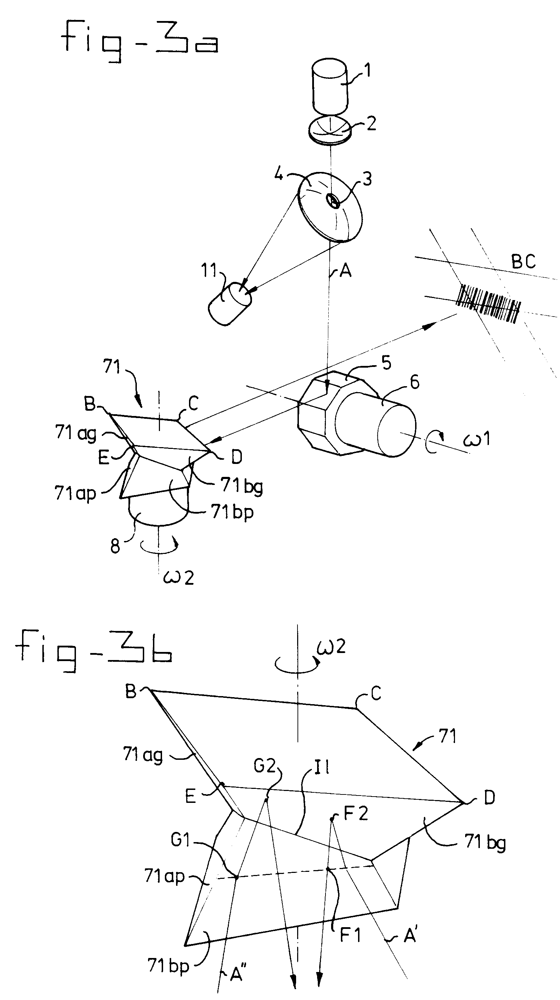

In the pre-moving geometry, a laser beam is first deflected by a first mirror rotating or oscillating with relatively low speed and then by a second mirror rotating or oscillating with relatively high speed. Scanning lines are produced by the second mirror. The incident angle of the light beam to the second mirror varies in accordance with the actual orientating of the first mirror. The distance between two adjacent scanning lines in the scanning pattern depends on the ratio of the low speed and the high speed. Embodiments of this first geometry will be explained below referring to figures 2a, 2b, 3a-3d.

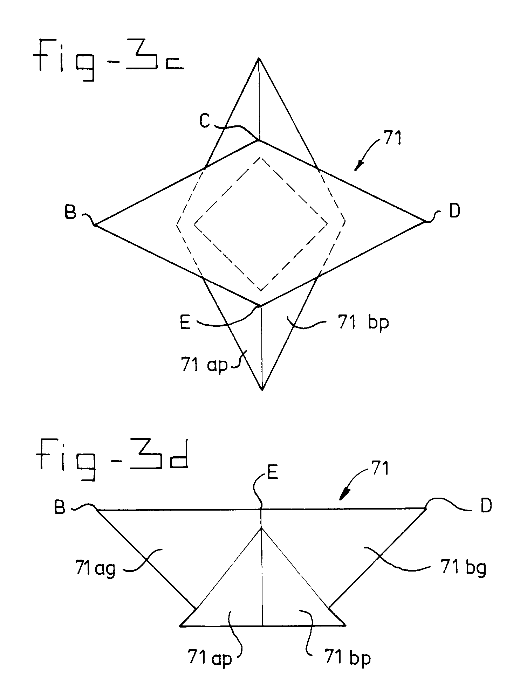

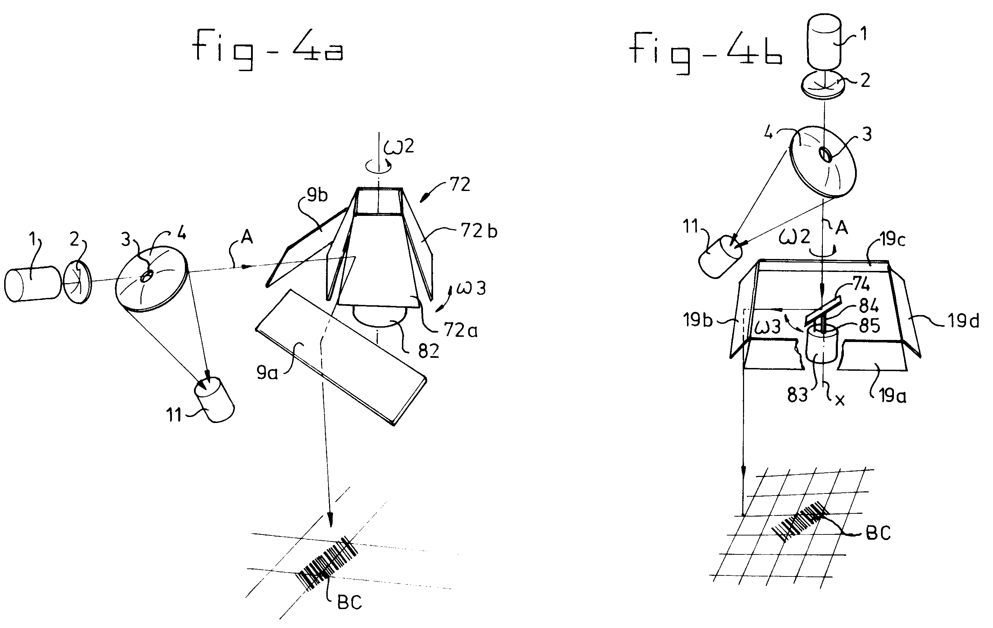

In the simultaneous-moving geometry, at least one mirror is used which is rotated, in operation, in a predetermined direction of rotation about an axis of rotation with a relatively high speed and which is oscillated in a direction perpendicular to the direction of rotation. The speed of oscillation is relatively low. In this geometry, because of the rotation with relatively high speed scanning lines are produced, whereas these scanning lines will be moved relative to each other because of the oscillation of relatively low speed. An example of a simultaneous-moving geometry will be explained below referring to the embodiments of figures 4a and 4b.

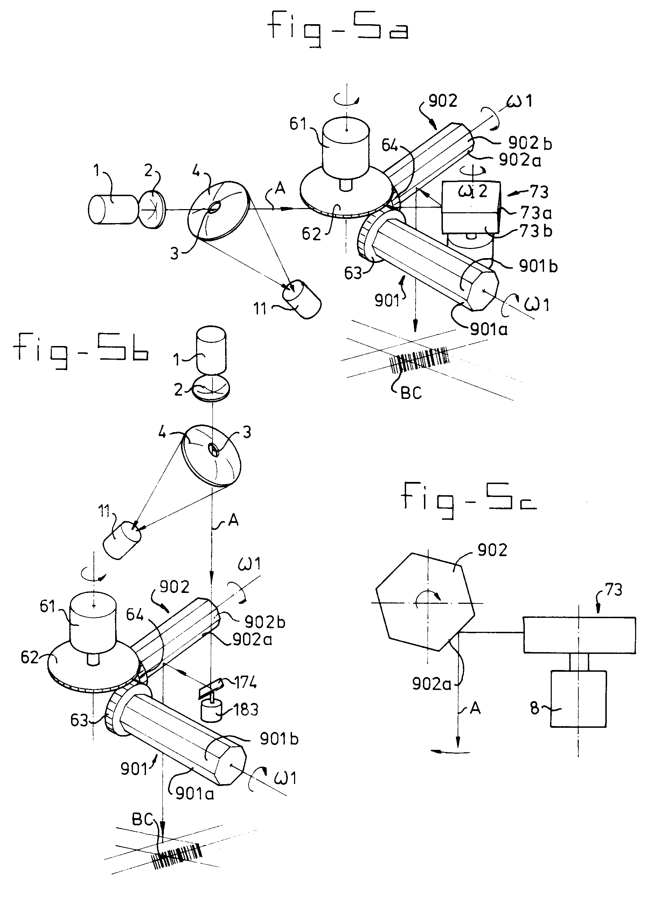

In the post-moving geometry, a laser beam is first deflected by at least one first mirror rotating or oscillating with a relatively high speed and then by at least a second and a third mirror rotating or oscillating with a relatively low speed. Scanning lines are produced by the first mirror rotating or oscillating with relatively high speed. Again, the incident angle to the second and third mirrors varies in accordance with the actual orientation of the first mirror rotating or oscillating with relatively low speed. The distance between two adjacent scanning lines produced depends on the ratio of the high speed and the low speed. The concept of post-moving geometry will be explained below referring to the embodiments of figures 5a-5d.

In the embodiment according to figure 2a, a light source 1, preferably a laser, produces a light beam A focused by suitable optics 2. Light beam A passes through a small hole 3 in a light collector 4 and impinges upon a first polygon 5 driven by a motor 6 of relatively low speed ω1. Reflected by the facets of the polygon 5 the light beam A is directed to a second polygon 7 driven by a motor 8 of relatively high speed ω2. The polygon 7 comprises several facets 7a, 7b, ..., the number of which is preferably no more than 4. Preferably, the facets 7a, 7b, are planar and substantially parallel to the axis of rotation of the motor 8. The speed of rotation ω2 of the motor 8 is relatively high compared to the speed of rotation ω1 of motor 6.

The light beam A is reflected by the facets 7a, 7b, ..., to beam separating means comprising two mirrors 9a, 9b. The mirrors 9a, 9b are perpendicular to one another and preferably tilted substantially 45° relative to the axis of rotation of motor 8. Since the mirrors 9a and 9b are perpendicular to one another perpendicular scanning lines 106, 109 are produced. Light is reflected back by barcode BC (or any other object to be scanned) to one of the mirrors 9a, 9b, and reflected back through polygon 7 and polygon 5 to light collector 4. Light collector 4 is designed to direct the reflected back light to photosensor 11.

If polygon 5 would be substituted by a fixed mirror only two perpendicular scanning lines would be produced by the arrangement according to figure 2a. However, since the facets of the polygon 5 are moving with relatively low speed, the light beam A reflected by the polygon 5 to the polygon 7 will move on its facets 7a, 7b in a direction parallel to the axis of rotation of the motor 8. Thus, polygon 5 acts as a multiplier of the scanning lines produced.

Instead of a rotating polygon 5, one single mirror 15 may be used driven by driving means 16 (figure 2b) to oscillate with a frequency ω3 between two extreme positions in such a way that the light beam A after being reflected by the oscillating mirror 15 always hits one of the facets 7a, 7b, ..., of polygon 7.

If polygon 5 comprises planar facets they may be parallel to the axis of rotation of motor 6. However, the facets of polygon 5 may also be tilted 45° relative to the axis of rotation of motor 6. In the latter embodiment light beam A propagating through the small hole 3 is, preferably, parallel to the axis of rotation of motor 6 before reflection by the facets of polygon 5.

Figures 3a-3d show a second embodiment of the invention in which, like in the embodiment according to figures 2a and 2b, a pre-moving geometry is used.

Figure 3a shows an arrangement in which a specially shaped polygon 71 is used receiving light beam A reflected by one of the facets of polygon 5 rotated by motor 6 with relatively low speed ω1 about an axis of rotation. In figure 3a, the same reference signs as in figure 2 refer to the same elements. Specially shaped polygon 71 is rotated about a second axis of rotation by a motor 8 with relatively high speed ω2.

Figures 3b, 3c, and 3d show a perspective view, a top view, and a side view of the specially shaped polygon 71, respectively.

The specially shaped polygon 71 comprises e.g. four sets of two reflecting planar facets 71ap/71ag, 71bp/71bg The orientation of these sets of reflecting planar facets is such that after being reflected by these reflecting planar facets the light beam A produces a scanning pattern comprising two sets of parallel scanning lines, the sets being perpendicular to one another.

One suitable way of defining the orientation of the planar reflecting facets 71ap/71ag, 71bp/71bg, ..., is the following. The two reflecting planar facets within one single set, e.g. planar facets 71ap/71ag, are preferably perpendicular to one another. Moreover, said planar facets 71ap/71ag intersect one another at a line of intersection tilted substantially π/4 radians with respect to the axis of rotation of motor 8. Also the planar facets 71bp and 71bg are perpendicular to one another. However, the line of intersection of the planar facets 71bp and 71bg is tilted substantially -π/4 radians with respect to the axis of rotation of motor 8. The actual tilting angle between the line of intersection between two planar facets of one set, say facets 71ap, 71ag, depends on the ratio of the distances BD and EC of the rhomb-shaped upper surface of the polygon 71. The larger BD relative to EC, the smaller the tilting angle between the line of intersection and the axis of rotation of motor 8 will be. In case BD equals EC, the line of intersection will be perpendicular to the axis of rotation of motor 8. Finally, both facets 71ap and 71bp, preferably, intersect the axis of rotation at an angle of π/4 radians.

Figure 3b, showing a perspective view of the specially shaped polygon 71, schematically shows two moments in time of reflection of the incident light beam A by the polygon 71. In case polygon 71 is rotated counterclockwise, as indicated by ω2, at one moment in time the incident light beam, indicated by A', first of all impinges upon a certain reflection point F1 on facet 71bp. It is reflected upwards to facet 71bg and, then, reflected by the latter facet 71bg at point F2. At a later moment in time, the incident light beam, indicated by A'', first of all impinges on facet 71bp on a point G1 more remote from the line of intersection IL between facets 71bp and 71bg than point F1. Beam A' is reflected by facet 71bp upwards to the facet 71bg. The facet 71bg reflects light beam A'' in a point G2 more remote from the line of intersection IL than point F2, thus moving the reflected beam A'' upwards relative to the reflected beam A'.

When facets 71bp and 71bg are perpendicular to one another the reflected beam will always be in a plane parallel to the incident light beam. However, since the line of intersection between facets 71bp and 71bg is tilted with respect to the axis of rotation the distance between the incident light beam and the reflected light beam changes during rotation. Consequently, the light beam reflected by the specially shaped polygon 71 not only sweeps about the axis of rotation, but also moves in a direction parallel to the axis of rotation. Because of the special shape of polygon 71 this movement parallel to the axis of rotation is in a predefined direction when the light beam is reflected by facets 71bp and 71bg and is in the opposite direction when the light beam is reflected by facets 71ap and 71ag. Thus, when the line of intersection between facets 71bp and 71bg is tilted -π/4 relative to the axis of rotation of motor 8 and the line of intersection between facets 71ap and 71ag is tilted π/4 relative to the axis of rotation of motor 8, a perpendicular scanning pattern will be produced.

By the application of polygon 5 rotated by motor 6 (see figure 3a) a kind of multiplying effect of the scanning pattern is produced. However, as stated before, the polygon 5 and the motor 6 may be substituted by the mirror 15 oscillated by suitable driving means 16 (figure 2b) between two extreme positions in such a way that the light beam A reflected by mirror 15 always impinges upon one of the facets of the specially shaped polygon 71. Again, as a further alternative, polygon 5 may have specially shaped facets shaped in such a way that the light beam A after reflection always impinges upon one of the facets of the specially shaped polygon 71.

In the arrangement according to figures 3a-3d, light reflected back by the barcode BC, or any other object to be scanned, is reflected again by the specially shaped polygon 71 and by polygon 5 to the light collector 4, which may be a specially shaped mirror to direct the reflected light to photosensor 11.

It is observed that in the embodiment according to figures 3a-3d the polygon 5, or its alternatives, could be omitted. In such a case, however, less scanning lines would be produced. In case specially shaped polygon 71 would, then, comprise four sets of facets (of which 71ap/71ag, 71bp/71bg are indicated in the drawings) two sets of two parallel scanning lines 106, 109 would be produced, the sets being perpendicular to one another. In fact, specially shaped polygon 71 has two functions at the same time. I.e. specially shaped polygon 71 at the same time generates scanning lines and separate them up in perpendicular sets. In other words, special shaped polygon 71 operates both as movable reflecting means, like polygon 7 in figure 2a, and as beam separating means, like mirrors 9a, 9b in figure 2a.

Figures 4a and 4b show one embodiment of an optical scanner according to the invention using a simultaneous-moving geometry as defined above.

In the embodiments of the present invention according to figures 2a, 2b, 3a-3d, polygon 5 driven by motor 6 is used to vary the angle of incidents of light beam A on a rotating or oscillating reflective surface in order to produce a kind of multiplying effect of the perpendicular scanning pattern produced. When the facets of polygon 5 are planar, as indicated above, during certain moments in time the light beam A reflected by polygon 5 misses the rotating or oscillating reflected surface. To minimize this disadvantage, the size of the facets of polygons 7 or 71, driven by motor 8, is required to be very large. Above, some alternatives have been presented to overcome this disadvantage. Figures 4a and 4b show embodiments which do not show this disadvantage.

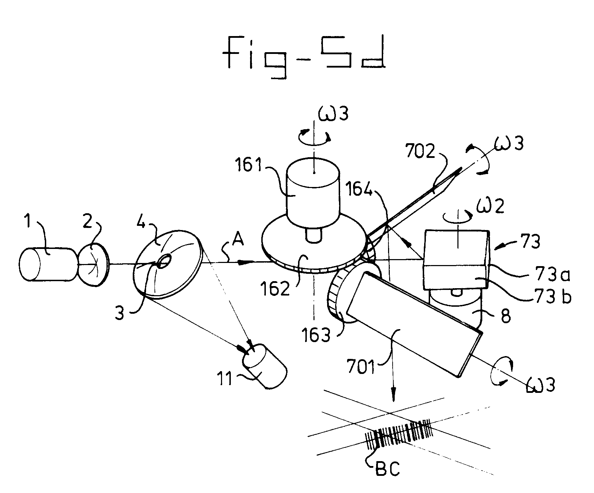

In figure 4a a polygon 72 is applied having reflective facets 72a, 72b, ..., preferably, substantially parallel to the axis of rotation. Light beam A originating from light source 1 impinges upon one of the facets 72a, 72b, ..., and is reflected to either one of a set of two perpendicular mirrors 9a, 9b. The polygon 72 is rotated by a motor 82 with a predefined speed ω2. However, contrary to the arrangement according to figure 2a, in which the facets 7a, 7b, are fixed relative to the polygon 7, the facets 72a, 72b, ..., of polygon 72 are able to oscillate in a direction perpendicular to the direction of rotation. Arrangements for independent control of the speed of rotation ω2 and the frequency of oscillation ω3 of the facets 72a, 72b, ..., are shown in European patent application 932027345 of the applicant of the present patent application. No further details will be given here. With respect to the special arrangement for the polygon 72 as shown in figure 4a, the reader is referred to figure 7 and its related description in the European patent application 932027345. It is observed, however, that the polygon 72 may be arranged in another way than indicated in that figure of that European patent application. The special arrangement of European patent application 932027345 provides independent control of the rotating speed ω2 and the oscillating frequency ω3. However, arrangements in which these speeds are related may be used instead. For instance, the arrangement shown in figure 10 of British patent application 2,255,650 may be used instead.

In order to produce the desired perpendicular sets of scanning lines, polygon 72 is rotated with a relatively high speed ω2, whereas the oscillating speed ω3 is relative low.

Preferably the number of facets 72a, 72b, ..., of polygon 72 does not exceed four.

Figure 4b shows an alternative for the arrangement according to figure 4a. Instead of polygon 72 one single mirror 74 is used. Mirror 74 is driven by driving means 83 to rotate with a relatively high speed ω2 about an axis of rotation x. For that purpose, mirror 74 is connected to the driving means 83 by the shaft 84. However, at the same time mirror 74 is connected to the driving means 83 by another shaft 85. The driving means 83 are arranged for oscillating the shaft 85 in a direction parallel to the axis of rotation x, thus providing the mirror 74 with the capability of an oscillating movement with a predetermined oscillating speed ω3. The oscillating speed ω3 is, preferably, much slower than the speed of rotation ω2.

Preferably, mirror 74 is tilted about 45° relative to the axis of rotation x. Moreover, the light beam A impinges upon mirror 74 along the axis of rotation x as shown in figure 4b. Mirror 74 reflects light beam A to one mirror of a set of mirrors 19a, 19b, 19c, 19d. These latter mirrors 19a-19d separate the light beam A in order to produce perpendicular sets of scanning lines. For these sets to be perpendicular, however, each two neighbouring mirrors of the mirrors 19a-19d have to be perpendicular to one another. Preferably, each of the mirrors 19a-19d are tilted 45° relative to the axis of rotation x.

It is to be understood that the application of four mirrors 19a-19d renders the best efficiency. However, the application of two perpendicular mirrors, e.g. 19a and 19b, would in principle be enough to produce the desired scanning pattern. In other words, instead of four mirrors 19a-19d, in the arrangement according to figure 4b, a set of two or three mirrors would be sufficient, the only condition being that at least two of these mirrors are perpendicular to one another.

Like in the arrangement according to figure 4a, the oscillating movement with oscillating speed ω3 provides a changing angle of inclination of light beam A on the mirrors 19a-19d, and thus provides a multiplying effect of the scanning pattern produced. In other words, the oscillating movement of the facets 72a, 72b, ..., of polygon 72 in the arrangement according to figure 4a and the oscillating movement of mirror 74 in the arrangement according to figure 4b performs the same function as the rotating polygon 5 in the arrangement according to figures 2a, 2b, 3a-3d.

Figures 5a-5d show embodiments of an optical scanner according to the invention in accordance with a post-moving geometry as defined above.

Figure 5a shows an arrangement, in which the same reference numbers as in figure 1 refer to the same elements and in which polygon 73 rotated by a motor 8 is applied. Polygon 73 is provided with several facets 73a, 73b, ..., that may be parallel to the axis of rotation of motor 8. The speed of rotation ω2 is relatively high. The optical scanner in accordance with figure 5a also comprises two polygons 901, 902. Polygons 901, 902 are rotatable about perpendicular axes of rotation. Polygons 901, 902 may be driven by the same motor 61 by means of gear 62. Gear 62 drives gear 63 connected to polygon 901 and gear 64 connected to polygon 902. Polygon 901 is provided with several planar facets 901a, 901b, ..., that may be parallel to the axis of rotation of polygon 901. Polygon 902 may similarly be provided with several facets 902a, 902b, ..., parallel to the axis of rotation of polygon 902. The polygons 901, 902 may be driven by the same speed of rotation ω1 which is, preferably, relatively low compared to the speed of rotation ω2 of polygon 73. The optical scanner in accordance with figure 5a produces perpendicular sets of scanning lines 101, 102. Since the angle of reflection of the light beam A by facets 901a, 901b, ..., of polygon 901 and by facets 902a, 902b, ..., of polygon 902 is varied by the rotation of the polygons 901 and 902, respectively, a multiplying effect of the perpendicular scanning lines is obtained. The changing angle of reflection between light beam A and facet 902a, as an example, is schematically illustrated in figure 5c.

Whereas all the embodiments according to figures 2a, 2b, 3a-3d, 4a, and 4b suffer from the disadvantage that only curved scanning lines can be generated, the arrangement according to figure 5a (as well as the arrangements according to figures 5b and 5d) has the advantage that straight scanning lines are produced.

In the arrangement according to figure 5a the polygon 73 may be substituted by a single mirror 174, as shown in figure 5b. The single mirror 174 is rotated by a motor 183 with a predetermined high speed ω2. The mirror 174 may be tilted 45° relative to the axis of rotation of motor 183. The incident light beam A, preferably, propagates along the axis of rotation of motor 183, as shown in figure 5b. Since in the embodiment of figure 5b the light beam A reflected by mirror 174 is swept 360° the arrangement could be extended by two more polygons (not shown) arranged in a similar arrangement as polygons 901 and 902, thus enhancing the efficiency of the optical scanner. However, of course, such an arrangement would result in a more expensive apparatus.

From figure 5c it may be clear that the light beam A reflected by the rotating facets of the polygons 901, 902 may sweep about substantial angles, thus, generating scanning lines on a large surface. This reduces the maximum possible efficiency. The efficiency may be increased by the application of two oscillating mirrors 701, 702, instead of the polygons 901, 902, respectively, as shown in figure 5d. Driving means 161 are arranged to oscillate both mirrors 701, 702 by means of a gear 162 connected to the drive means 161, a gear 163 connected to mirror 701 and a gear 164 connected to mirror 702. By oscillating both mirrors 701 and 702 between well defined extreme positions, a scanning pattern may be produced within well defined boundaries.

Of course, the polygon 73 in the arrangement according to figure 5d may be substituted by a single mirror 174 as shown in the arrangement according to figure 5b. Then, the position of light source 1, optics 2, light collector 4 with small hole 3 and photosensor 11, have to be changed accordingly.

In the arrangement in which a single mirror 174 is used, the motor 183 may be arranged to oscillate the mirror 174 between two extreme points shifted 180° relative to one another, thus enhancing the efficiency of the optical scanner when only two polygons 901 and 902 are used. The same applies when one single mirror 174 instead of polygon 73 is used in the arrangement according to figure 5d.

As an alternative to figures 5a and 5b, the mirror 174 in figure 5b may be replaced by a polygon comprising several facets tilted about 45° relative to the axis of rotation of motor 183. This also applies to the arrangement of figure 5d.

It is appreciated that the embodiments shown in the figures only show preferred embodiments. Many modifications can be made without departing from the scope of the invention which is only limited by the annexed claims. For instance, the polygons 901 and 902 may be provided with several specially shaped facets which are not planar as the facets shown, but which are shaped such that the light beam A reflected by the facets remains within a well defined restricted area. Moreover, the driving means 61-64, and 161-164 in figures 5a and 5d, respectively, may be substituted by any other suitable driving means. As an alternative, the polygons 901 and 902 of figures 5a and 5b, and the mirrors 701 and 702 of figure 5d, may be independently controlled.

## Claims

1. Optical scanner for producing a first set of one or more scanning lines and a second set of one or more scanning lines, said first set and said second set of one or more scanning lines being substantially perpendicular to one another, comprising:
- a light source for producing a light beam (A);
- movable reflecting means (7; 71; 72; 74; 73; 174) arranged to reflect said light beam (A);
- beam separating means (9a/9b; 71ag/71ap, 71bg/71bp; 19a-19d; 901/902) arranged to receive said light beam reflected by said movable reflecting means and to separate said light beam in separate sub-beams in order to produce said first set of one or more scanning lines and said second set of one or more scanning lines;
- multiplying means (5; 83/74; 701/702; 901/902) for multiplying the scanning lines produced.

2. Optical scanner according to claim 1, wherein said movable reflecting means comprise a polygon (7) connected to a motor (8) and rotatable about an axis of rotation, said polygon (7) comprising several reflecting planar facets (7a, 7b), and wherein said beam separating means comprise a first mirror (9a) and a second mirror (9b) perpendicular to said first mirror.

3. Optical scanner according to claim 2, wherein said reflecting planar facets (7a, 7b) are substantially parallel to said axis of rotation and wherein said first and second mirrors (9a, 9b) are tilted substantially π/4 radians with respect to said axis of rotation.

4. Optical scanner according to claim 1, wherein said movable reflecting means and said beam separating means are constituted by a polygon (71) connected to a motor (8) and rotatable about an axis of rotation, said polygon (71) comprising at least a first set of a first and a second reflecting planar facet (71ag/71ap) and a second set of a third and a fourth reflecting planar facet (71bg/71bp), said first and said second reflecting planar facets (71ag/71ap) having a first line of intersection tilted substantially π/4 radians with respect to the axis of rotation, and said third and said fourth reflecting planar facets (71ag/71ap) having a second line of intersection tilted substantially -π/4 radians with respect to the axis of rotation.

5. Optical scanner according to claim 4, wherein said first reflecting planar facet (71ag) is perpendicular to said second reflecting planar facet (71ap) and wherein said third reflecting planar facet (71bg) is perpendicular to said fourth reflecting planar facet (71bp), and both the first and third planar facets are tilted substantially π/4 radians relative to the axis of rotation.

6. Optical scanner according to any of the preceding claims 2 to 5, wherein the multiplying means comprise a further polygon (5) connected to a further motor (6), said further polygon (5) being provided with several reflecting facets arranged for receiving said light beam from said light source and reflecting said light beam to said movable reflecting means.

7. Optical scanner according to any of the preceding claims 2 to 5 wherein the multiplying means comprise a further mirror (15) connected to driving means (16) for oscillating said further mirror (15), said further mirror (15) being arranged for receiving said light beam from said light source and reflecting said light beam to said movable reflecting means.

8. Optical scanner according to claim 1, wherein said movable reflecting means and said multiplying means are constituted by a polygon (72) connected to a driving means (82), said polygon (72) comprising several reflecting planar facets (72a, 72b), and wherein said beam separating means comprise a first mirror (9a) and a second mirror (9b) perpendicular to said first mirror, said driving means (82) being arranged for rotating each of said reflecting planar facets (72a, 72b) about an axis of rotation in a predetermined direction of rotation and for oscillating each of said reflecting planar facets (72a, 72b) in a direction perpendicular to said predetermined direction of rotation.

9. Optical scanner according to claim 1, wherein said movable reflecting means and said multiplying means are constituted by a mirror (74) connected to a driving means (83) for rotating said mirror (74) about an axis of rotation in a predetermined direction of rotation and for oscillating said mirror (74) in a further direction perpendicular to said predetermined direction of rotation, and said beam separating means comprises at least a first mirror (19a) and a second mirror (19b) perpendicular to said first mirror (19a).

10. Optical scanner according to claim 1, wherein said movable reflecting means comprise a mirror (174) connected to first driving means (183) for rotating said mirror (174) about a first axis of rotation, and wherein said beam separating means and said multiplying means are constituted by at least a first polygon (901) connected to second driving means (61, 62, 63) for rotating said first polygon (901) about a second axis of rotation and a second polygon (902) connected to third driving means (61, 62, 64) for rotating said second polygon (902) about a third axis of rotation perpendicular tot said second axis of rotation, said first polygon (901) comprising a first plurality of planar reflective facets (901a, 901b) parallel to said second axis of rotation and said second polygon (902) comprising a second plurality of planar reflective facets (902a, 902b) parallel to said third axis of rotation.

11. Optical scanner according to claim 10, wherein said second and said third driving means comprise one single motor (61).

12. Optical scanner according to claim 1, wherein said movable reflecting means comprise a first polygon (73) connected to first driving means (8) for rotating said first polygon (73) about a first axis of rotation, and wherein said beam separating means and said multiplying means are constituted by a second polygon (901) connected to second driving means (61, 62, 63) for rotating said second polygon (901) about a second axis of rotation and a third polygon (902) connected to third driving means (61, 62, 64) for rotating said third polygon (902) about a third axis of rotation perpendicular tot said second axis of rotation, said first polygon (73) comprising a first plurality of planar reflective facets (73a, 73b), said second polygon (901) comprising a second plurality of planar reflective facets (901a, 901b) parallel to said second axis of rotation and said third polygon (902) comprising a third plurality of planar reflective facets (902a, 902b) parallel to said third axis of rotation.

13. Optical scanner according to claim 1, wherein said movable reflecting means comprise a polygon (73) connected to first driving means (8) for rotating said polygon (73) about a first axis of rotation, and wherein said beam separating means and said multiplying means are constituted by a first mirror (701) connected to second driving means (161, 162, 163) for oscillating said first mirror (701) about a second axis of rotation and a second mirror (702) connected to third driving means (161, 162, 164) for oscillating said second mirror about a third axis of rotation perpendicular to said second axis of rotation, said polygon (73) comprising a plurality of planar reflective facets (73a, 73b).
